# EUROPEAN PATENT APPLICATION

(11) **EP 0 558 771 A1**
(43) Date of publication of application: **08.09.1993**
(21) Application number: 92103543.2
(22) Date of filing: 02.03.1992
(51) Int. Cl.: G01L 11/00, G01N 21/64

(54) **Luminescent pressure sensitive composition**

(71) Applicant: ALITECO AG, CH-6300 Zug (CH)
(72) Inventor: Mosharov,Vladimir, Zug (CH); Kuzmin,Mikhael, Zug (CH); Orlov,Anatoli, Zug (CH); Radchenko,Vladimir, Zug (CH); Sadovskii,Nikita, Zug (CH); Troyanovsky,Igor, Zug (CH)
(74) Representative: Baronetzky, Klaus, Dipl.-Ing.

(57) **Abstract**

A luminescent pressure sensitive composition for determining an air pressure pattern comprises a binder, preferably a polymer binder, with a luminophore, of which the intensity of luminescence depends on air pressure. The luminophore of which the intensity of luminesence depends on air pressure (active luminophore) is mixed together with an additional luminophore of which the intensity of luminescence has different dependence on air pressure than said active luminophore (reference luminophore).

## Description

The present invention relates to the luminescent pressure sensitive composition for the determination of air pressure pattern on the surface of a body. This invention can be used in various science and technology fields. It is particularly suitable in determining the air pressure field in aerodynamic investigations.

The most important problem in aerodynamic is concerned with the determination of distributed forces acting on a body.
The basic component of these forces originates from the distributed air pressure on a surface of the body. The problem in defining the distributed forces involves the determination of the pressure pattern on the surface of the body. Thus, an appropriate method should be provided to measure air pressure at each point of a surface in experimental researches.

The method uses a surface coating which contains probe molecules (luminophores) that emit luminescence when excited by an appropriate light source. Oxygen molecules in the air interfere with the process of the luminescence and decrease ("quench") the amount of luminescence. As a result, the luminescence of the paint varies as functions of the partial pressure of oxygen. Therefore, the parameters of luminescence (intensity and lifetime) can be related to the static pressure of the air at the coated surface.

A luminescent pressure sensitive composition for determination of pressure pattern on the models in a wind tunnel has been employed by (cf.J.Kavandi, J.Callis, M.Gouterman, G.Khalil, D.Wright, E.Green, D.Burns, B.McLachian "Luminescent barometry in wind tunnels". Rev. Sci. Instrum., 61, 11, November 1990).

Their composition include platinum octaethylporphyirin (PtOEP) which is dissolved in Genesee Polymers GP-197 dimethylsiloxane polymer solution. The solution is applied on the interested surface. The 1,1,1-trichloroethane solvent evaporates, and leaves a smooth film. The luminescence of luminophor - PtOEP was excited by an UV lamp with a filter that only allowed light with wavelength above 400nm to pass through.

Other studies for determining air pressure pattern on a surface have been conducted by (M.J.Morris, J.F.Donovan, J.T.Kegelman, S.D.Schwab, R.L.Levy, R.C.Crites. "Aerodynamic Applications of Pressure-Sensitive Paint". 30th Aerospace Sciences Meeting & Exhibit, January 6-9, 1992/Reno, NV.
The specific formulation of the composition was although not specified. The luminescence of composition was excited by visible blue light and was detected by a video camera.
The determination of air pressure pattern was carried out by using images of the model taken at wind-off and at wind-on conditions.
The approximation of the luminescence intensity of the composition was modeled by Stern-Volmer relation:

${\text{I}}_{\text{o}} {\text{/I = 1 + K}}_{\text{q}} {\text{P}}_{\text{O2}}$

where I is the intensity of luminescence, Iₒ is the intensity of luminescence in the absence of oxygen, P_{O2} is the partial pressure of oxygen, K_{q} is the Stern-Volmer constant.
or ${\text{I}}_{\text{o}} \text{/I = 1 + KP}$ , where P is the pressure of air.

In the various experiments carried out in a wind tunnel, the results were influenced by model movement and dust contamination during the flow.
The emitted light from a specific point of a surface covered by the composition was depending on the amount of excitation light from the light source, but the amount of light received was depending on the distance from a specific point to the light source and on the angle of the surface. Furthermore, the intensity of emitted light received by camera was depending on the distance from the camera and on the angle of the surface. Since the model generally has a complex surface both the distance and the angle to the light source and the camera varies in each point over the surface of the model. Therefore Iₒ varies in each point over the model. Usually in real experiments Iₒ is not used as the reference intensity. To determine the pressure at a specific point, the intensity at each point Iᵣ at atmospheric pressure P (wind-off condition) is divided by its intensity in air flow (wind-on condition).

${\text{I}}_{\text{r}} {\text{/I = (1+KP)/(1+KP}}_{\text{r}} \text{)}$

K- is determined in calibration pressure chamber.
If the camera and light source are fixed to the tunnel's walls the optical data is recorded at atmospheric pressure at each angle-of-attack.
However, since during the flow the model is subjected to movements due to the action of aerodynamic forces and the surface of the model is contaminated by dust particles during a test, the accuracy of the pressure measurements was low.

With this invention it is possible to eliminate the above mentioned problems thus making it possible to perform a real and precise determination of the air pressure pattern.

The luminescent pressure sensitive composition particularly suitable for determining the air pressure pattern includes a polymer binder.
This binder contains two different types of luminophores (active luminophore and reference luminophore) which are mixed together. The active luminophore luminescence intensity depend on air pressure. The reference luminophore luminescence intensity do not depend on the air pressure.
The reference luminophore spectral region of excitation does not coincide with the active luminophore spectral region of luminescence.
The spectral region of luminescence of the reference luminophore does not coincide with the spectral region of luminescence of the active luminophor or (depending on the type of composition) the luminescence lifetime of the active luminophore differs from the reference luminophore lifetime.
The lifetime of luminescence is defined as the time of decreasing of intensity of luminescence in 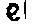 (≈ 2,73) times.

Evaporation of solvent and solidification of polymer binder leads to a uniform film on the surface.

The luminescence of active and reference luminophors are excited by an appropriate light source. In the case of composition in which luminophores differ by decay time, the luminescence of the composition is excited by a pulsed light source.
The intensity of luminescence of both types of luminophore is affected in the same way by dust, by the distance to the light source, by the distance to the light detector and by the angle of the surface.

Therefore it is possible to prevent the influence of dust and model displacement by dividing the luminescence intensity of reference luminophor by the luminescence intensity of oxygen sensitive luminophor.
The result obtained depends only on air pressure.

${\text{I}}_{\text{ir}} \text{/I = A + CP}$

Where Iᵢᵣ is the intensity of reference luminophor, A and C are the constants that can be determined when performing a calibration in pressure chamber.
The spectrum of luminescence of this invented composition with the internal reference consist of spectrum of luminescence of oxygen sensitive luminophor and spectrum of luminescence of reference luminophor.
To divide this spectrum there are two ways, these depend on the properties of the composition.
1. By using filters with appropriate transmittance.
2. By different integration time of signal of total luminescence of luminescence composition.
The procedure of dividing the total signal of luminescence is dependent on the lifetime of the components.

### Example of a pressure sensitive composition (composition 1).

Luminescence composition with the internal reference for the determination of pressure pattern, containing a metal compound of platinum group with the organic ligand as oxygen sensitive luminophor, 7-diethylamino-4-methylcoumarin as internal reference luminophor, organosilicon polymer as binder:

| | % by mass |
|---|---|
| Genesee Polymer GP-197 dimethylsiloxane polymer | 99.85 |
| Platinum (II) octaethylporphyrine (PtOEP) | 0.10 |
| 7-diethylamino-4-methylcoumarin | 0.05 |

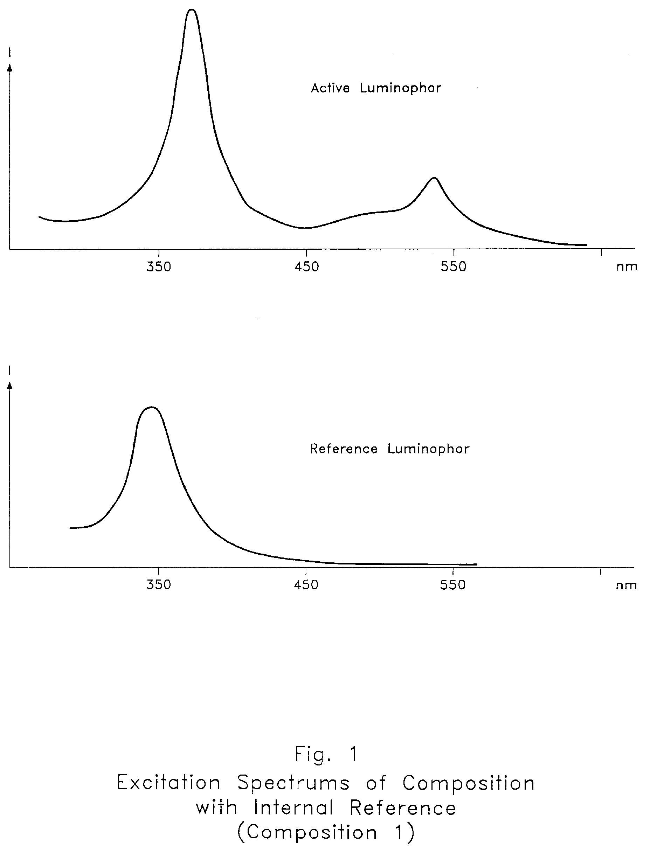

Excitation spectrums of active and reference luminophores of this composition are illustrated in Fig. 1.

The excitation of luminescence of composition with the internal reference is caused by a pulsed nitrogen laser (I = 337.1nm) or mercury arc lamp with an UV-filter.

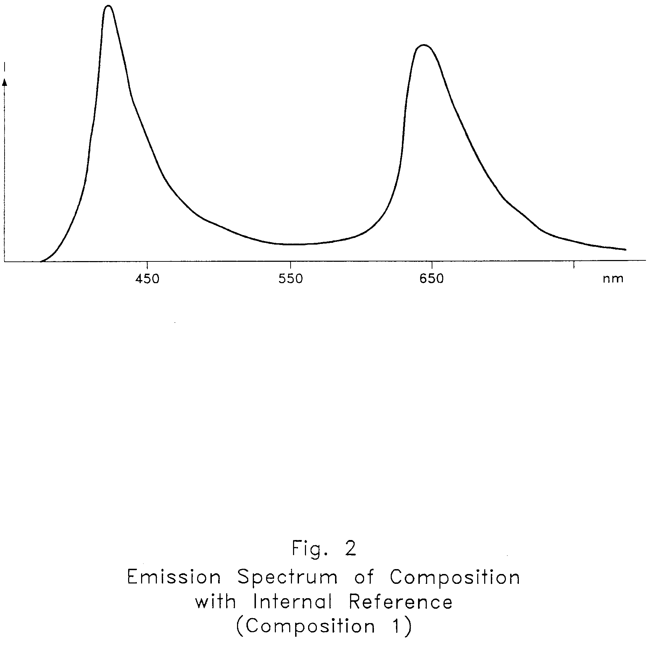

The procedure of separation of luminescence signal of platinum (II) octaethylporphyrin is carried out with filters having the appropriate transmittance. For PtOEP (active luminophore) the filter must transmit a light with wavelength above 500nm. For 7-diethylamino-4-methylaminocoumarin (reference luminophore) the filter must transmit a light with wavelength in the spectral region 400-480nm. See Fig. 2.

### Example of a second pressure sensitive composition (composition 2).

Luminescent composition with the internal reference for the determination of pressure pattern containing a metal compound of platinum group with organic ligand as oxygen sensitive luminophor and inorganic luminophor - yttrium oxide activated by europium (Y₂O₃ :Eu) as reference luminescence substance.

| | % by mass |
|---|---|
| Genesee Polymer GP-197 dimethylsiloxane polymer | 70.00 |
| Platinum(II)octaethylporphyrin (PtOEP) | 0.10 |
| Inorganic luminophor Y₂O₃ :Eu | 29.90 |

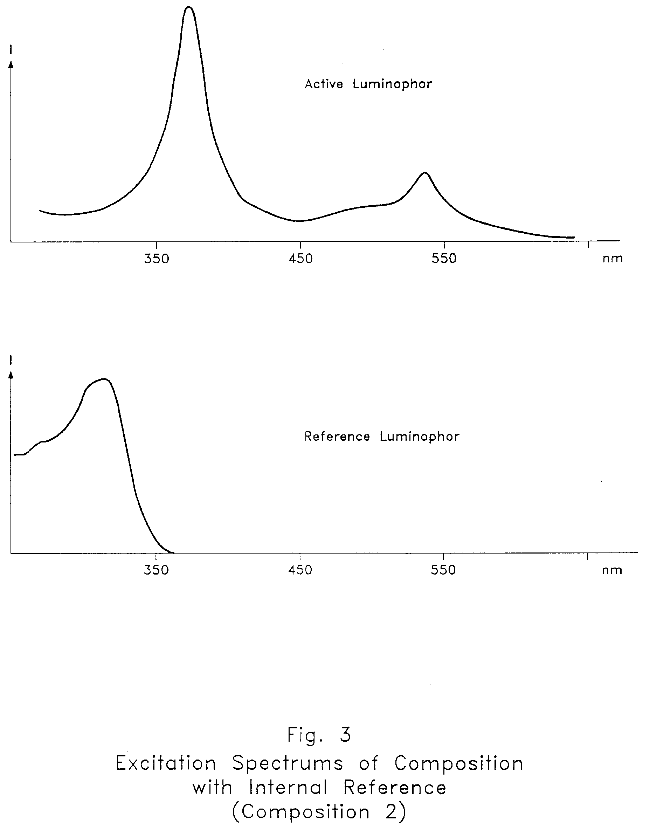

Excitation spectrums of active and reference luminophores of this composition are illustrated in Fig. 3.

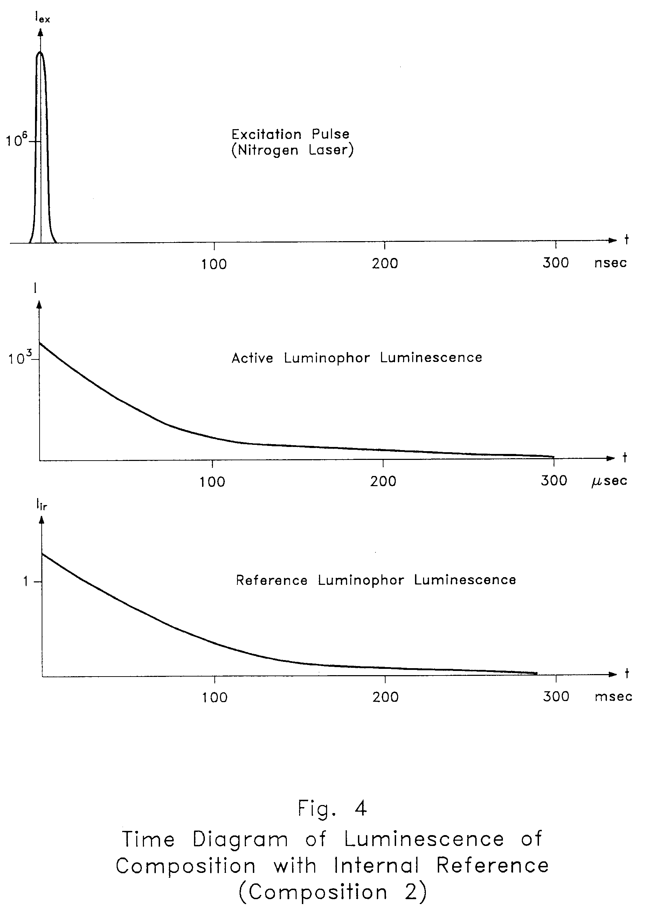

The luminescence of thin powder inorganic luminophor Y₂O₃ :Eu is observed in spectral region 600-700 nm.
The lifetime of luminescence of PtOEP(active luminophore) is nearly 70 microseconds, and the lifetime of luminescence of Y₂O₃ :Eu (reference luminophore) is nearly 100 milliseconds.
The excitation of luminescence of this composition is caused by a pulsed nitrogen laser or flash lamp. See time diagram in Fig. 4.
The beginning of integration of signal of luminescence of the composition is synchronized with the pulse of the source of excitation (nitrogen laser). Integration of the signal in microsecond range (0-100 msec) results in the signal of oxygen sensitive luminophor (PtOEP). The composition was developed in such a way that the full integral of luminescence of reference and active luminophore are approximately equal. 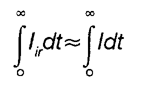
In the range 0-100µs the energy at reference luminophore is practically zero. 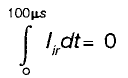
Integration of the signal in millisecond range (1-100 msec), after the decay of PtOEP results in the signal of reference luminophor (Y₂O₃ :Eu).

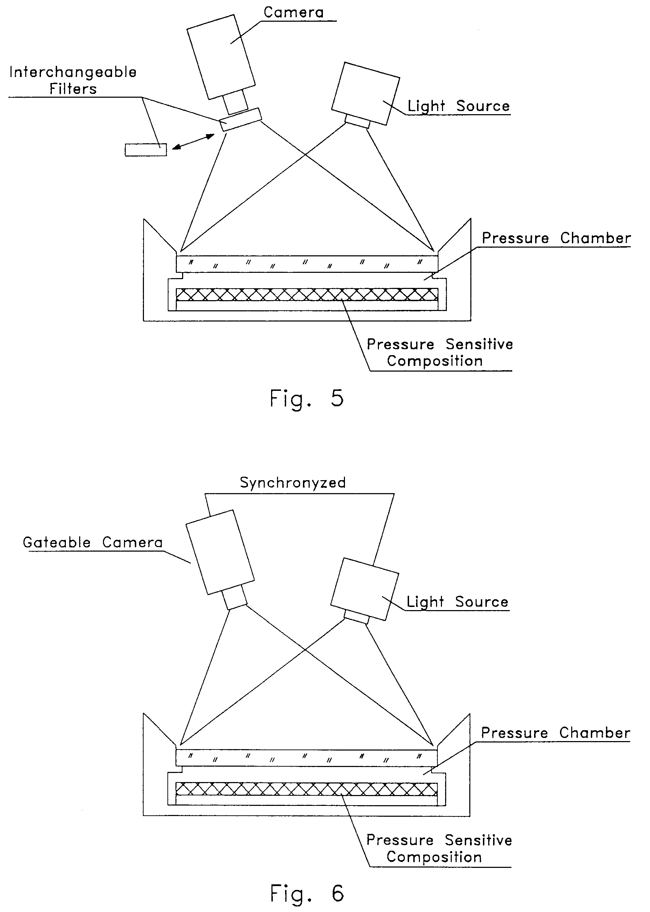

In aerodynamic investigations the luminescent composition with the reference for the determination of the pressure pattern is applied to the investigated surface of the model and to the sample for calibration.
The calibration chamber is illustrated in Fig.5. and Fig 6.
The sample of luminescence composition with the internal reference is placed in pressure chamber. The luminescence of sample is excited by a source of light as in a real aerodynamic experiment (pulse N₂ laser).

The registration of luminesce signal from a sample covered with the composition obtained in using the formula described in example 1 (see page 7) (Fig 5.) is performed by video camera and interchangeable filters. The data is acquired using two filters, one having a transmission in the spectral region 400-480 to obtain the reference data Iᵢᵣ and the other having a transmission in the spectral region above 600nm to obtain the intensity of pressure sensitive luminophor I.

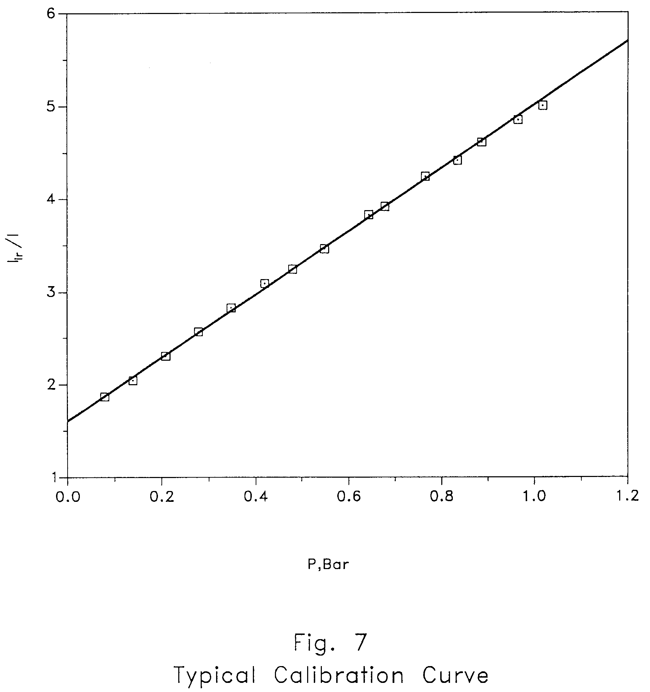

The separation of luminescent signals from a sample covered with the composition obtained in using the formula given in the example regarding composition 2 is performed by a gateable intensified video camera (Fig 6). The beginning of integration of camera is synchronized with the pulse of the laser. Integration of the signal in microsecond range (0-100msec) results in the signal of oxygen sensitive luminophor I. Integration the signal in millisecond range (1-100 msec) results in the signal of reference luminophor Iᵢᵣ.
The pressure calibration of composition is carried out using the same source of excited light, time delays and cameras as in the actual experiment for determination of pressure pattern.
The luminescence signal of the internal reference luminophor is divided by luminescence signal of oxygen sensitive luminophor under each pressure of air to determine the calibration curve. A typical calibration curve is illustrated in Fig. 7.

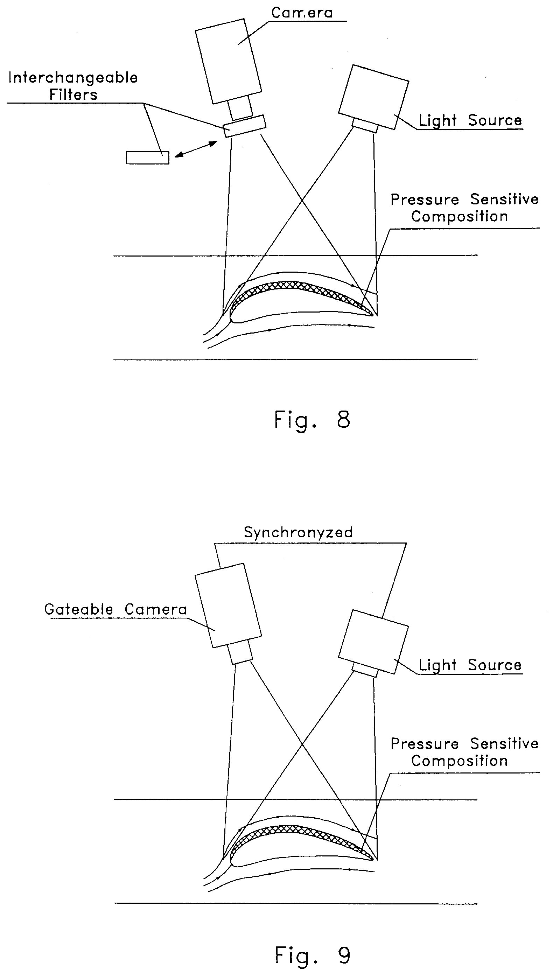

Fig, 8 and 9, illustrate a model placed in the air flow.
The luminescence of oxygen sensitive luminophor and the luminescence of reference luminophor of the composition are simultaneously excited by means of a pulse N₂ laser. The signal of luminescence from surface of interest in each point of the investigated surface is registered from the oxygen sensitive luminophor and reference luminophor by using filters and a video camera when the composition, which is described in example 1, (see page 7) has been applied on the model (Fig 8). A gateable intensified video camera must be used if the model has been coated with a composition described in the example which referred to composition 2 (see page 8).
The signal of internal reference in each point of the investigated surface is divided by the signal of luminescence of oxygen sensitive luminophor to determine the pressure in accordance with the calibration curve.

The two images which are acquired during wind-on condition at the same time, and respectively refer to the two different luminophore emission, are taken with the model having exactly the same position and same dust contamination level.

With this composition, it is possible to measure pressure patterns on elastic models and parachute models.

## Claims

1. Luminescent pressure sensitive composition for determining an air pressure pattern, comprising a binder, preferably a polymer binder, having a luminophore, of which the intensity of luminescence depends on air pressure, characterized in that said luminophore of which the intensity of luminesence depends on air pressure (active luminophore) is mixed together with an additional luminophore of which the intensity of luminescence has different dependence on air pressure than said active luminophore (reference luminophore).

2. Composition according to claim 1, characterized in that a spectral region of excitation of the reference luminophore does not overlap the spectral region of emission of the active luminophore.

3. A luminescent pressure sensitive composition for determining an air pressure pattern, comprising a binder, preferably a polymer binder, having a luminophore, of which the intensity of luminescence depends on air pressure, characterized in that said luminophore of which the intensity of luminesence depends on air pressure (active luminophore) is mixed with an additional luminophore of which the intensity of luminescence does not depend on air pressure (reference luminophore).

4. Composition according to one of the preceeding claims, characterized in that the reference luminophore luminescence spectral region differs from the active luminophore luminescence spectral region.

5. Composition according to one of the preceeding claims, characterized in that the active luminophore luminescence lifetime differs from the reference luminophore luminescence lifetime.

6. Composition according to one of the preceeding claims, characterized in that said active luminophore is oxygen sensitive.

7. Composition according to one of the preceeding claims, characterized in that the full time integral of luminescence of the reference and the active luminophore are approximately equal.

8. Sensor made by using a composition according to one of the preceeding claims.

9. Sensor according to claim 9, characterized in that the sensor comprises a pulsed or flashed light source, with the leading or trailing edge of the pulse signal being used to control the time when the luminescence of the active luminophore is detected and the time when the luminescence of the reference luminophore is detected.
